# EUROPEAN PATENT SPECIFICATION

(11) **EP 2 592 012 B1**
(45) Date of publication and mention of the grant of the patent: **11.05.2016**
(21) Application number: 13153917.3
(22) Date of filing: 28.03.2008
(51) Int. Cl.: B65D 41/20, B65D 41/44, B65D 43/02, B65D 51/00, B32B 15/08, B32B 27/12, B32B 27/32

(54) **A closure system**
Verschlusssystem
Système de fermeture

(30) Priority: 30.03.2007 AU 2007901666 P
(43) Date of publication of application: 15.05.2013
(62) Divisional of application: 08733278.9
(73) Proprietor: Impress Australia Pty Ltd, Abbotsford, VIC 3067 (AU)
(72) Inventor: Tang, Andrew Tuan, Abbotsford, VIC. 3067 (AU); Barling, William Howard, Abbotsford, VIC. 3067 (AU); Hawthorne, Donn Bede, Abbotsford, VIC. 3067 (AU); Owens, Andrew, Abbotsford, VIC. 3067 (AU)
(74) Representative: Regimbeau

(56) References cited:
- EP-A1- 0 511 562
- WO-A1-97/25255
- AT-B- 346 758
- DE-A1- 2 111 886
- FR-A1- 2 566 738
- GB-A- 1 536 556

## Description

### FIELD AND BACKGROUND OF INVENTION

The present invention relates to containers having a closure system that provides a high barrier to moisture or oxygen.

The present invention relates particularly, although by no means exclusively, to containers made from metal.

Certain dry products are highly sensitive to moisture in that the products degrade due to absorption of moisture. For example, milk powders and infant formulations contain labile vitamins which may degrade rapidly if excessive moisture levels are reached. As a further and more extreme example, certain types of nutritional/flavoured milk additives have been found by the applicant to be extremely moisture sensitive, requiring less than a 2% increase in weight due to moisture pickup to become unusable.

Other products are very sensitive to oxygen in that the products degrade due on exposure to oxygen. Products in this category include, for example, instant coffee, infant formula, milk powder, drink concentrates. Many of these products are also sensitive to moisture.

In order to avoid moisture and/or oxygen contact, products of the types described above have traditionally been and are still packed in hermetically sealed metal cans. For ease of access, high performance re-sealing, and tamper evidence, the metal dans typically comprise a closure system referred to in the art as a "tagger ring and foil" (TRF) closure system. Document WO 97/252555 A1 describes such a closure system.

A traditional TRF system comprises a first component in the form of a "ring", a second component in the form of a "lever plug", and a third component in the form of a foil sheet.

The ring of the traditional TRF system is adapted to be sealed to a can body by a process of double seaming as understood in the art of can manufacture and comprises a flowed-in sealant also according to the known art. The sealant is typically a rubber composition that provides desirable sealing properties under compression. The ring further comprises a central orifice. The orifice is defined by an annular wall having an edge that extends into the container.

The lever plug of the traditional TRF system comprises a flat panel that is formed to close the orifice with an interference fit. The lever plug further comprises a flange that extends outwardly from the panel above the vertical wall of the orifice when the plug is positioned in the orifice. The flange prevents the plug being pushed inside the can and makes it possible to lever the plug out of the can with an appropriate implement such as a spoon to thereby gain access to the contents of the can.

For the purposes of this specification a seal resulting from an interference fit is understood to be a seal provided by forcing one component of controlled diameter, in this case a lever plug, into an orifice of controlled diameter in another component, in this case a ring, where the diameter of the one component, i.e. the lever plug, is greater than or equal to the diameter of the other component, i.e. the orifice in the ring.

The foil of the traditional TRF system is located inside the can and extends from a seaming flange on the ring across the entire end of the can. The foil is restrained in the seaming flange and is encapsulated in the double seam at sealing. The foil may be restrained by applying sealing material over an edge of the foil.

In use, the foil provides an hermetic seal for the contents of a can up to the time that a consumer opens the can and ruptures the foil. Thereafter, the interference fit between the ring and the lever plug makes it possible to re-seal the can with sufficient moisture barrier to maintain product quality during successive cycles of removing the lever plug and removing contents from the can and then inserting the lever plug back into the can and re-sealing the can.

For reasons of strength, aluminium foil has traditionally been used as the foil in traditional TRF closure systems. However, aluminium foil is expensive. In addition, aluminium foil can form sharp edges when the foil is ruptured to enable access to a can and the sharp edges can cut consumers as the consumers remove the contents of the can from the can. The applicant has found that this is a particularly serious issue from the viewpoint of marketability of the cans. Further, in times of increasing environmental consciousness, the use of aluminium foil as a seal in a metal can, such as a steel can, is undesirable as the aluminium is a contaminant when re-cycling the metal can.

For the above reasons, there is a need for an alternative to the traditional TRF closure system that does not include the use of an aluminium foil at all or at least reduces the amount of aluminium in the TRF system compared to the amount of aluminium in the traditional TRF closure system and that can be used in a conventional manufacturing process for cans or other containers.

In particular, these is a need for an alternative to the traditional TRF closure system that addresses the issue of sharp edges that form when the aluminium foil of the traditional TRF closure system is ruptured.

The above description is not to be taken to be an indication of the common general knowledge in Australia or elsewhere.

### SUMMARY OF THE INVENTION

According to the present invention there is provided a tagger ring foil (TRF) closure system for a container, such as a can, according to claim 1.

### RESULTS OF FOIL TESTING

The importance an appropriate board burst strength and ring drush resistance pressure is illustrated in the following examples that relate to test work on a group of samples.

In the examples:
- The thickness of samples was measured using AS 1301.426s.
- The board burst strength of samples was measured using the board burst test according to AS 1301.438s.
- The ring crush resistance pressure of samples was measured using AS 1301.407s.
- The ring crush resistance pressure of a composite foil sample in accordance with the present invention was measured in a cross direction of the paper layer of the foil sample, The foil sample comprised the following layers: paper, a first polymer, aluminium foil, and a second polymer.
- The cutting ability of the samples was assessed on the basis of an assumption that this is related to the ring crush resistance pressure divided by the cross sectional area of a sample being crushed. The length of a ring crush sample was 152 mm. From the measured ring crush resistance pressure and the thickness of the sample a parameter, hereafter referred to as 'ring crush resistance pressure', was determined by dividing the measured ring crush resistance pressure value by 152 mm and the measured thickness.
- The ability of the samples to cut fingers was determined subjectively using a 'fingertip hardness' test by a laboratory technician determining how hard a sample feels against his/her fingertips.

The applicant tested the board burst strength and ring crush resistance pressure of the samples on the basis that these parameters are good indicators of fingertip hardness of the samples, with harder samples being more likely to cut consumers.

Burst was chosen as a test as the board burst test, which involves a hydraulic piston driving a rubber diaphragm about 25 mm in diameter through a sheet of material, is thought to replicate a consumer seeking to burst through a sheet of unbroken foil of a TRF closure system on a can to gain access to the contents of the can.

A series of aluminium and composite foil samples were measured and tested as described above. The cutting ability of the different samples was subjectively assessed.

The samples received were aluminium foil samples of nominal thicknesses of 100 µm, 90 µm, 60 µm, 30 µm and 15 µm. The performance of this traditional foil material was compared to that of one embodiment of a composite foil in accordance with the present invention, as described above. The composite foil had a nominal thickness of 120 µm.

The results of the tests are shown in Table 1 below.

**Table 1 - Results of testing aluminium and composite foil samples.**

| Sample | Measured thickness, um | Board burst, KPa | Ring crush, N | Ring crush resistance pressure, MPa | Fingertip hardness |
|---|---|---|---|---|---|
| '100 um' aluminium foil | 106 | 1087 | 388 | 24.1 | High |
| '90 um' aluminium foil | 101 | 929 | 308 | 20.0 | High |
| '60 um' aluminium foil | 67 | 735 | 158 | 15.5 | Medium |
| '45 um' aluminium foil | 50 | 470 | 87 | 11.5 | Medium |
| '30 um' aluminium foil | 31 | - | 39 | 8.3 | Soft |
| '15 um' aluminium foil | 16 | - (*) | 6 | 2.6 | Soft |
| Composite foil | 122 | 343 | 115 | 6.2 | Soft |

- Although the board burst strength for the 15 um sample was not measured, the sample was measured with the similar paper burst test, AS 1301.403s. A value of 77 kPa was measured. Overall, the board burst and paper burst strengths were broadly comparable, for example the composite foil sample had a paper burst strength of 312 kPa and a board burst strength of 343 kPa.

Table 1 shows that:
- The board burst strength and the ring crush resistance pressure of the traditional aluminium foil samples reduced significantly with a reduction in thickness. However, whilst these results suggests that reducing the thickness of aluminium foil used in traditional TRF closure systems is one option for minimising the current cutting problem, this is not an option form the viewpoint of manufacturing on current can manufacturing lines.
- The fingertip hardness of the traditional aluminium foil also changes as the thickness of the aluminium changes, moving from hard to soft.
- As indicated above, the properties of board burst strength and ring crush resistance pressure are good indicators of fingertip hardness. The results indicate that values of 400 kPa and 10 MPa, respectively, for board burst strength and ring crush resistance pressure are approximate dividing lines between soft and hard samples.

### DESCRIPTION OF THE DRAWINGS

The present invention is described further by way of example with reference to the accompanying drawings, of which:
Figure 1 is a transverse section of a traditional TRF closure system;
Figure 2 is a detailed section of the area circled as "A" in Figure 1; and
Figure 3 is a section of one embodiment of a TRF closure system in accordance with the present invention which shows the multiple layers of material that make up the system.

### DETAILED DESCRIPTION OF THE DRAWINGS

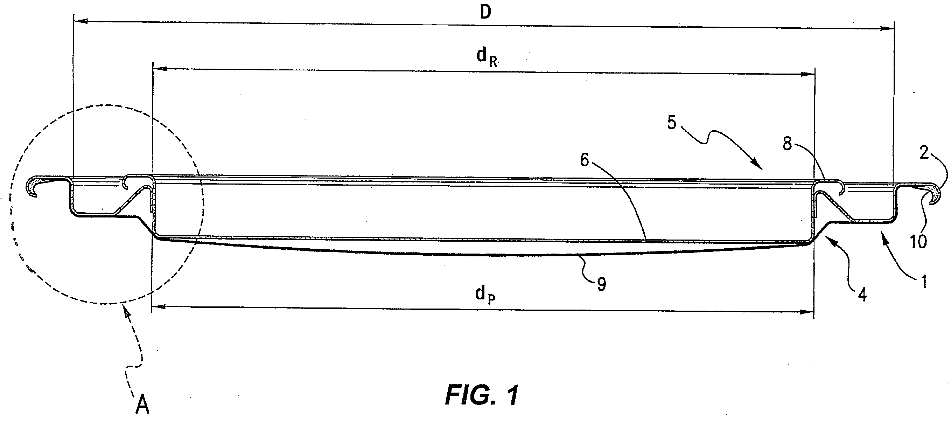

Figure 1 shows a traditional TRF closure system of the known art.

The traditional TRF system comprises a ring 1, a plug 5, and a foil 9.

The ring 1 of the traditional TRF system comprises a seaming curl 2, a vertical sealing surface 3 that defines an orifice to allow access to a container, and an inwardly facing cut edge 4 of a foil.

The plug 5 of the traditional TRF system comprises a panel 6, a substantially vertical sealing surface 7, and an outwardly extending flange 8 allowing the plug to be levered from the orifice in the ring.

The foil 9 of the traditional TRF system extends across the inside of the TRF system to the sealing material 10 around the periphery in the seaming curl 2. Alternately, the foil 9 can be heat sealed to a flat section of the ring, not shown. The foil 9 provides the primary seal for extended shelf life prior to opening.

The traditional TRF closure system has 3 critical dimensions, namely a nominal diameter D measured as shown, a ring diameter d_{R}, and a plug diameter d_{P}. The interference seal between the ring 1 and the plug 5 is provided by selecting d_{P} to be sufficiently larger than d_{R} so that a seal and grip is achieved, but not so large that insertion of the plug is excessively difficult. The range of acceptable interference is known to those skilled in the art and is embodied in manufacturing specifications for such parts.

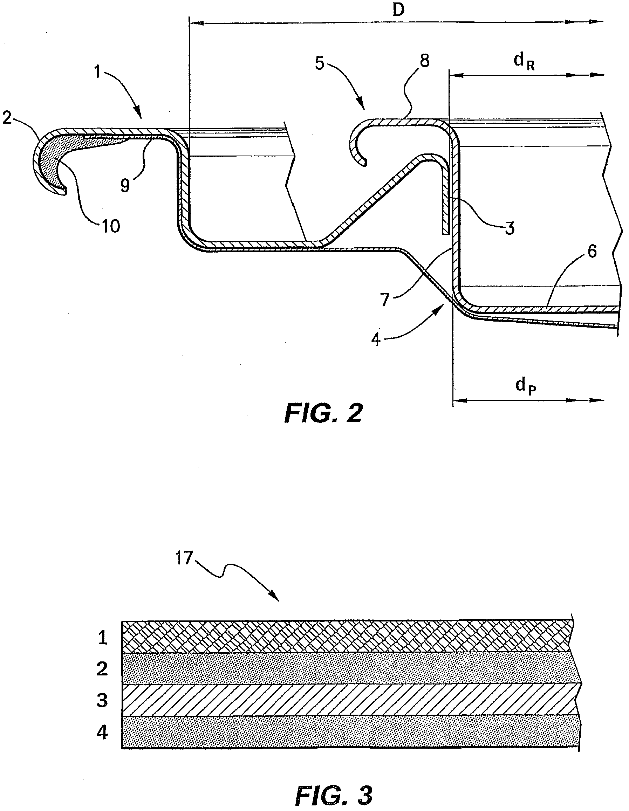

Figure 2 shows in greater detail the critical seal areas of the traditional TRF system.

Figure 3 shows one embodiment of the composite foil 17 of the present invention. The composite foil comprises successive layers of paper layer 1, a polymer layer 2, an aluminium foil layer 3, and another polymer layer 4.

The paper may be any suitable paper. Suitable paper includes a 35 gsm or 50 grams per square metre (gsm) bleached kraft sheet made by Australia Paper. Alternative options include grammages ranging from 25 to 100 gsm. The functions of the paper layer 1 are: (a) bulk at low cost, (b) high tensile strength to permit seaming without fracture, (c) easy tearing for consumer access, and (d) minimise risk of a consumer being cut by exposed edges of a ruptured composite foil.

The polymer layer 2 comprises a co-extruded copolymer of (a) a low density polyethylene (LDPE) in the section of the layer 2 that joins the paper layer 1 and (b) an ethylene acrylate acid resin adjacent the aluminium foil. The LDPE layer is about 2/3 of the total of thickness of the layer 2. The thickness of the layer 2 ranges from 8 to 30 um, and is preferably 12 um. The polymer layer 2 is provided to adhere together the paper layer 1 and the aluminium foil layer 3. The LDPE is selected on the basis of its capacity to adhere to paper and the ethylene acrylate acid resin is selected on the basis of its capacity to adhere to aluminium.

The aluminium foil layer 3 in the composite foil is 30 um in thickness, but could conceivably range from 15 to 60 um in thickness. The function of the aluminium foil is to provide high oxygen and moisture barrier properties, both of which are important for long term shelf stability of an unopened container. The aluminium foil layer 3 also contributes to the mechanical properties of the composite foil.

The bottom layer 4 is a co-extruded co-polymer. The bottom layer comprises (a) a LDPE filled with 30% talc to weaken the overall structure, with this material forming an exposed surface of the composite foil and (b) a terpolymer of ethylene methyl butyl acrylate grafted with a maleic anhydride to adhere the layer 4 to the aluminium foil layer 3. Preferably the thickness of this layer is 20 um, but can conceivably range from 15 to 50 um. An important function of the bottom layer 4 is to protect the aluminium of the foil layer 3 from oxidation and other undersirable chemical reactions and to provide a layer of a material that is approved for direct food contact.

## Claims

1. A tagger ring foil (TRF) closure system for a container, such as a can, **characterized in that** it comprises a composite foil having the following layers:
a paper (1) layer having a thickness between 25 and 100gsm,
a first polymer (2) layer having a thickness between 10 and 30 um, said first polymer (2) layer comprising a low density polyethylene co-extruded with an acrylic acid such as ethylene acrylic acid,
a metal layer (3) having a thickness between 15 and 30 um, the metal of the metal layer comprising aluminium, and
a second polymer (4) layer with one of the layers comprising, a filler, the foil having a board burst strength, when measured with Australian Standard (AS) 1301.438s, of less than 400 KPa and/or a cross direction ring crush resistance pressure, defined as the ring crush measured using AS 1301.407s, divided by 0.152 and multiplied by the foil thickness measured using AS 1301.426s, of less than 10 MPa.

2. The system defined in claim 1 wherein the materials that form the layers of the composite foil and the combination of the layers are selected so that, in use, when the foil is part of a TRF closure system on a container and the foil is ruptured to gain access to the contents of the container, the ruptured foil does not form with a sharp edge that can cut consumers.

3. The system defined in claim 1 or claim 2 wherein the materials that form the layers of the composite foil and the combination of the layers are selected so that the foil can be processed in a conventional container manufacturing process that includes forming the container with a TRF closure system.

4. A container, such as a can, that comprises the tagger ring foil (TRF) closure system defined in any one of the preceding claims.

5. The container defined in claim 4, wherein the composite foil of the closure system is applied to the container so that the paper side of the foil is an outward facing side of the foil.

6. The container defined in claim 4 or claim 5, wherein the container is a metal container.

## Patentansprüche

1. Trägerringfolien-(TRF)-Verschlusssystem für einen Behälter, wie eine Dose, **dadurch gekennzeichnet, dass** es eine Verbundfolie mit folgenden Schichten aufweist:
eine Papierschicht (1), aufweisend eine Dicke von zwischen 25 und 100 g/m²,
eine erste Polymerschicht (2), aufweisend eine Dicke von zwischen 10 und 30 µm, wobei die erste Polymerschicht (2) ein mit einer Acrylsäure, wie Ethylen-Acrylsäure, koextrudiertes Polyethylen niedriger Dichte umfasst,
eine Metallschicht (3), aufweisend eine Dicke von zwischen 15 und 30 µm, wobei das Metall der Metallschicht Aluminium enthält, und
eine zweite Polymerschicht (4), mit einer der Schichten aufweisend einen Füllstoff, wobei die Folie eine Berstdruckfestigkeit bei Platten aufweist, die bei Messung nach Australian Standard (AS) 1301.438s weniger als 400 kPa beträgt und/oder einen Quer-Ringstauchdruckwiderstand, definiert als Ringstauch nach Australian Standard AS 1301.407s, geteilt durch 0,152 und multipliziert mit der gemäß AS 1301.426s gemessenen Foliendicke, von weniger als 10 MPa aufweist.

2. System nach Anspruch 1, wobei die Materialien, die die Schichten der Verbundfolie bilden, und die Kombinationen der Schichten so gewählt sind, dass, im Gebrauch, wenn die Folie Teil des (TRF)-Verschlusssystems an einem Behälter ist, und die Folie aufgebrochen wird, um Zugang zum Inhalt des Behälters zu gewähren, die aufgebrochene Folie keine scharfe Kante bildet, die die Verbraucher schneiden kann.

3. System nach Anspruch 1 oder Anspruch 2, wobei die Materialien, die die Schichten der Verbundfolie bilden, und die Kombinationen der Schichten so gewählt sind, dass die Folie in einem herkömmlichen Behälter-Herstellungsvorgang, der ein Formen des Behälters mit einem TRF-Verschlusssystem umfasst, verarbeitet werden kann.

4. Behälter, wie eine Dose, der das Trägerringfolie-(TRF)-Verschlusssystem nach einem der vorhergehenden Ansprüche aufweist.

5. Behälter nach Anspruch 4, wobei die Verbundfolie des Verschlusssystems so am Behälter angebracht wird, dass die Papierseite der Folie eine nach außen gerichtete Seite der Folie ist.

6. Behälter nach Anspruch 4 oder Anspruch 5, wobei der Behälter ein Metallbehälter ist.

## Revendications

1. Système de fermeture à feuille annulaire en tôle mince (TRF) pour un récipient, tel qu'une canette, **caractérisé en ce qu'**il comprend une feuille composite ayant les couches suivantes :
une couche de papier (1) ayant une épaisseur comprise entre 25 et 100 g/m²,
une première couche de polymère (2) ayant une épaisseur comprise entre 10 et 30 µm, ladite première couche de polymère (2) comprenant un polyéthylène à faible densité co-extrudé avec un acide acrylique tel que l'acide acrylique d'éthylène,
une couche métallique (3) ayant une épaisseur comprise entre 15 et 30 µm, le métal de la couche métallique comprenant de l'aluminium, et
une seconde couche de polymère (4) avec l'une des couches qui comprend, une matière de remplissage, la feuille ayant une résistance à l'éclatement de plaque, lorsqu'elle est mesurée avec la norme australienne (AS) 1301.438s, inférieure à 400 KPa et/ou une pression de résistance à l'écrasement à l'anneau dans le sens travers, définie comme étant l'écrasement à l'anneau mesuré à l'aide de la norme AS 1301.407s, divisé par 0,152 et multiplié par l'épaisseur de feuille mesurée à l'aide de la norme AS 1301.426s, inférieure à 10 MPa.

2. Système selon la revendication 1, dans lequel les matériaux qui forment les couches de la feuille composite et de la combinaison de couches sont sélectionnés de sorte que, à l'usage, lorsque la feuille fait partie d'un système de fermeture à TRF sur un récipient et que la feuille est rompue pour avoir accès au contenu du récipient, la feuille fracturée n'est pas formée avec un bord tranchant qui peut couper les consommateurs.

3. Système selon la revendication 1 ou la revendication 2, dans lequel les matériaux qui forment les couches de la feuille composite et de la combinaison de couches sont sélectionnés de sorte que la feuille peut être traitée dans un procédé de fabrication de récipient classique qui comprend l'étape consistant à former le récipient avec un système de fermeture à TRF.

4. Récipient tel qu'une canette, qui comprend le système de fermeture à feuille annulaire en tôle mince (TRF) selon l'une quelconque des revendications précédentes.

5. Récipient selon la revendication 4, dans lequel la feuille composite du système de fermeture est appliquée sur le récipient de sorte que le côté papier de la feuille est un côté orienté vers l'extérieur de la feuille.

6. Récipient selon la revendication 4 ou la revendication 5, dans lequel le récipient est un récipient métallique.
